# EUROPEAN PATENT APPLICATION

(11) **EP 2 680 205 A1**
(43) Date of publication of application: **01.01.2014**
(21) Application number: 13003183.4
(22) Date of filing: 21.06.2013
(51) Int. Cl.: G06Q 20/34

(54) **Mobile Wallet Payment Processing**

(30) Priority: 26.06.2012 US 201213533057
(71) Applicant: Carta Worldwide, Inc., Oakville, Ontario L6J 1H9 (CA)
(72) Inventor: Mendes, Rui, Oakville, Ontario, L6J 2R3 (CA)
(74) Representative: Müller-Boré & Partner Patentanwälte

(57) **Abstract**

A method and system for mobile wallet payment processing. A request may be received from a mobile wallet operative on a mobile device for a virtual credit card, the request including device identification and a predefined payment form. A virtual credit card is dynamically issued by a payment processor responsive to the request. The virtual card is communicated to the mobile wallet on the mobile device and used to authorize a transaction with a vendor. A payment request is received from the vendor by the payment processor, which includes the virtual credit card, transaction details, and the identification of the mobile device authorizing the transaction. Upon verification of the information in the payment request and available funds, the payment processor processes payment for the transaction using the virtual credit card, with the predefined payment form used to satisfy any charges incurred by the virtual credit card.

## Description

### BACKGROUND

The following relates to mobile payments, mobile device communications, and so forth.

Mobile payment generally refers to regulated financial services that are performed by or from a mobile device. Mobile payment is an alternative method of payment that, instead of using cash, checks, or credit cards, the user may use a mobile phone to pay for a wide range of goods and services. There are currently four models for conducting such mobile payments, SMS-based transactional payments, direct mobile billing, mobile web payments (using Wireless Application Protocol (WAP) technology), and contactless near field communications.

SMS-based transactional payments require a user of the mobile device to send an SMS text message or the like, to a short code and a resulting premium charge is added to the user's phone bill or online wallet (as described below). The merchant in the transaction is then informed of the success of the payment and may release the goods, perform the services, etc. Unfortunately, this type of mobile payment has poor reliability, is slow, provides minimal security, high start-up and operating costs, and the like.

Direct mobile billing generally involves a two-factor authentication (e.g., PIN and one-time-password) following which the user's mobile device account is charged for the purchase. Such payment is typical of payments made using mobile phones via ITUNES and ANDROID MARKET, e.g., payment for purchase of games, apps, music, etc. The security for such billing is higher than the SMS-based transactions, faster, convenient (no pre-registration, input of credit/debit cards), and easy (for online purchases). However, this method is limited to online purchases from the aforementioned sites or sites operated by the user's carrier. Additionally, already large carrier telephone bills may present a substantial shock to the user when such purchases are added.

Mobile web payments provide for the display and usage of web sites or downloaded applications to make payments to vendors. This type of operation inherently includes the benefits and disadvantages associated with web-based payments. For example, the user must still pre-register some form of credit card (unless directly billed to the carrier as set forth above); the process mirrors the typical online purchase format familiar to Internet users; if no pre-registration is available, the user must enter credit card information directly via the mobile device, which is prone to entry errors, and the like. Online wallets provided by PAYPAL, AMAZON PAYMENTS and GOOGLE CHECKOUT have mobile options, which involves online user registration. The user first provides a telephone number to one of the online wallet operators, whom then returns an SMS message having a PIN. The user then authenticates the number by entering the PIN and inputs credit card information or another payment method. Payments are then validated during a limited number of transactions. That is, the online wallets are useful for online purchases from a fixed location from online vendors. However, mobility is an issue as the online wallet is maintained by the providers and not on the mobile device, which is especially disadvantageous at a retail establishment that does not provide for online purchases.

Near Field Communication (NFC) is generally used in physical transactions, wherein the vendor and the user are in close physical proximity, e.g., at retail establishments, transportation services, restaurants, and the like. This type of mobile payment requires a specially designed mobile device equipped with a smartcard that is "swiped" by holding the mobile device in close physical proximity to a card reader. The transaction in question may involve direct billing, PIN-based authentication, bank billing, pre-paid.account, or the like. Unfortunately, this method requires a suitably equipped mobile device, as well as suitably equipped card readers at the point-of-sale. Widespread adoption of NFC has thus been hindered by users unwilling to purchase new phones equipped with NFC, vendors unwilling to purchase the equipment necessary to read NFC devices, mobile device manufacturers unwilling to incorporate additional features over which they have little control, etc.

A mobile wallet, in contrast to an online wallet, may include software, hardware, or a combination thereof, resident on a mobile device, that includes one or more linked accounts. However, current implementations of mobile wallets are based on specific infrastructure and/or network acceptance. For example, STARBUCKS mobile wallet is only accepted at their corresponding coffee establishments, PAYPAL is only accepted when online merchants connect to PAYPAL, GOOGLE CHECKOUT (mobile wallet variant) only works if you use a CITIBANK credit card, in a specific region, and using a specific device.

Thus, it would be advantageous to provide a generic mobile wallet method and system that is ubiquitous and operable independent of specific infrastructure, device, or network acceptance.

### BRIEF DESCRIPTION

In accordance with one aspect of the exemplary embodiment, a method for mobile wallet payment processing includes receiving a request for a virtual credit card from a mobile wallet operative on an associated mobile device, the request including a device identification and a predefined payment form. The method also includes dynamically issuing, with a processor, a virtual credit card responsive to the request, the virtual credit card associated with the device identification and the predefined payment form, and communicating the dynamically issued virtual credit card to the mobile wallet operative on the associated mobile device. The method further includes receiving a payment request from a vendor for payment for at least one of a good or a service, the payment corresponding to a charge to the virtual credit card, and verifying funds associated with the virtual credit card relative to the charge of the payment request. In addition, the method includes rendering the payment to the vendor using the virtual credit card responsive to a verification of the funds associated with the virtual credit card.

In another aspect, a mobile wallet payment processing system includes a virtual credit card issuer that is configured to dynamically issue a virtual credit card in response to a request received from a mobile wallet on an associated mobile device, the request including a device identification and a predefined payment form, and communicating the dynamically issued virtual credit card to the mobile wallet. The system also includes a payment processing component that is configured to analyze a payment request for payment of a transaction for at least one of a good or a service, the payment corresponding to a charge to the virtual credit card. The payment processing component is also configured to verify funds associated with the virtual credit card relative to the charge of the payment request, and to render the payment to the vendor using the virtual credit card responsive to a verification of the funds associated with the virtual credit card. In addition, the system includes a processor which implements at least one of the virtual credit card issuer and the payment processing component.

In another aspect, a computer-implemented method for mobile wallet payment processing that includes selecting at least one predefined payment form corresponding to at least one of a checking account, a savings account, a credit card account, a debit card account, or a charge account. The method also includes linking, with a processor, the at least one selected predefined payment source to a mobile wallet on an associated mobile device, and receiving a dynamically issued virtual credit card from an associated payment processor, the virtual credit card funded from the at least one selected predefined payment source linked to the mobile wallet. Additionally, the method includes receiving an authorization request from a vendor for payment for at least one of a good or a service, the payment corresponding to a charge to the virtual credit card, and rendering the payment to the vendor using the virtual credit card responsive to an approval of the authorization request.

### BRIEF DESCRIPTION OF THE DRAWINGS

FIGURE 1 is a functional block diagram of a system for mobile wallet payment processing in accordance with one aspect of the exemplary embodiment.

FIGURE 2 is a flow chart which diagrammatically shows a method for mobile wallet payment processing in accordance with one aspect of the exemplary embodiment.

FIGURE 3 is a flow chart which diagrammatically shows a portion of a method for mobile wallet payment processing in accordance with one aspect of the exemplary embodiment.

FIGURE 4 is a flow chart which diagrammatically shows another portion of the method for mobile wallet payment processing in accordance with one aspect of the exemplary embodiment.

### DETAILED DESCRIPTION

One or more implementations of the subject application will now be described with reference to the attached drawings, wherein like reference numerals are used to refer to like elements throughout.

As described herein, there is provided a method for mobile wallet payment processing. It will be appreciated that the subject systems and methods described hereinafter provide mobile wallet payment processing operations that offer increased acceptance across any infrastructure or network acceptance, in contrast to other existing mobile payment schemes, as referenced above. With respect to the example implementation regarding a mobile wallet on a mobile device, mobile payment improvement may correspond to an increased usage by consumers, and acceptance by vendors, as well as a decrease in costs associated with mobile payments, or other like parameters. Additional improvements may be an increase in the simplicity of mobile payments, such as a reduction in the amount of time needed to consummate a transaction using a mobile device.

Accordingly, the embodiments set forth in greater detail below include mobile wallet payment processing operations that may be implemented independent of specific infrastructure or network acceptance.

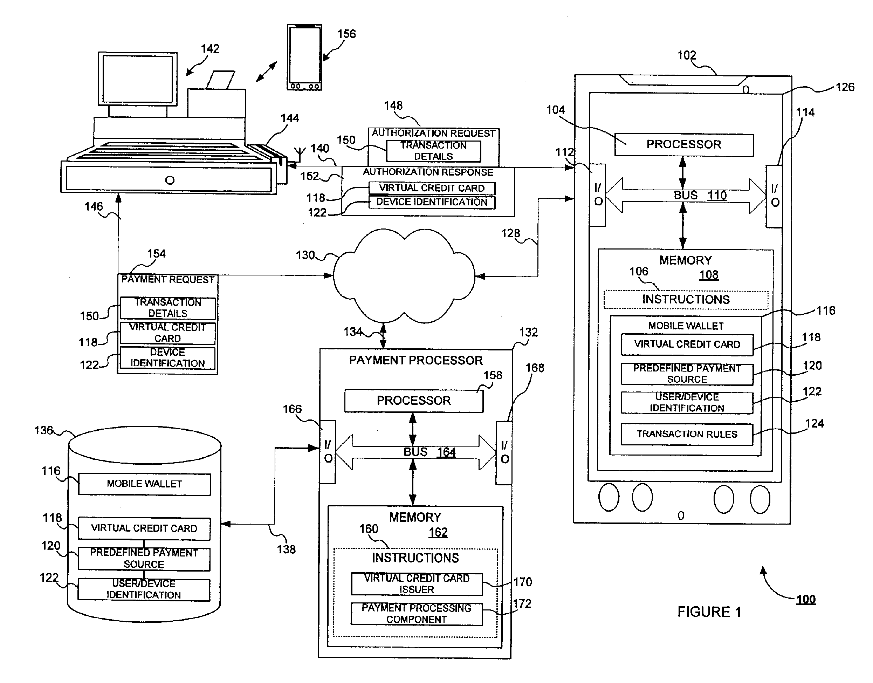

Referring now to FIGURE 1, there is shown a functional block diagram of a computer-implemented system **100** for mobile wallet payment processing. It will be appreciated that the various components depicted in FIGURE 1 are for purposes of illustrating aspects of the subject application, and that other similar components, implemented via hardware, software, or a combination thereof, are capable of being substituted therein.

The mobile wallet payment system **100** is capable of implementation using a distributed computing environment, such as a computer network, which is representative of any distributed communications system capable of enabling the exchange of data between two or more electronic devices. Such a computer network may include, for example, a virtual local area network, a wide area network, a personal area network, a local area network, the Internet, an intranet, a cellular network, or any suitable combination thereof. The computer network may include physical layers and transport layers, e.g., Token-Ring, Ethernet, LTE, WiMax, or other wireless or wire-based data communication mechanisms. Furthermore, while depicted in FIGURE 1 as a networked set of components, the system and method are capable of implementation on a stand-alone device adapted to perform the methods described herein.

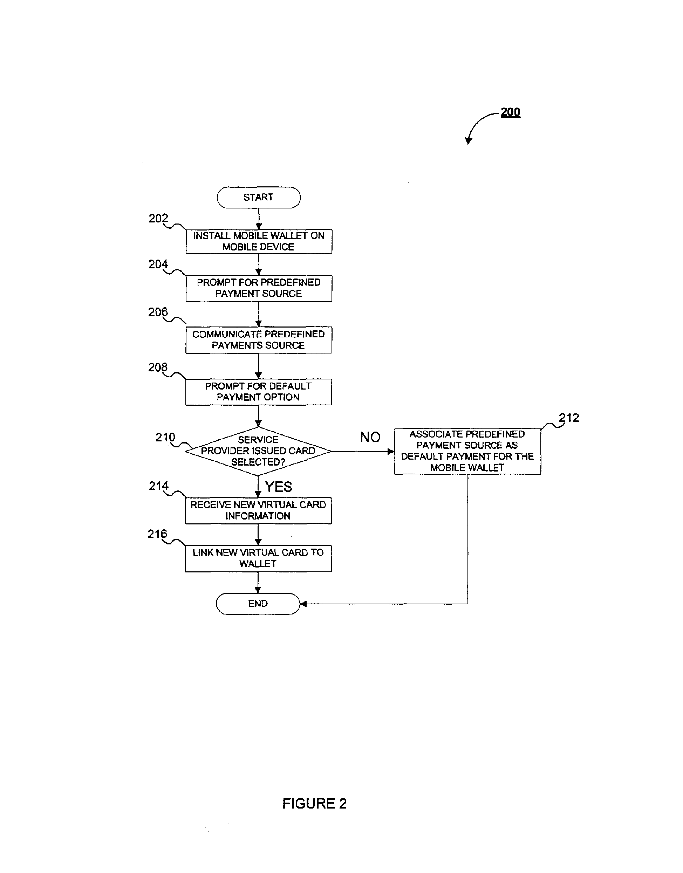

As shown in FIGURE 1, the mobile wallet payment system **100** includes a mobile device **102** having a processor **104,** which is capable of implementing at least a portion of the exemplary method described in FIGURES 2-3 by execution of software processing instructions **106** which are stored in memory, such as memory **108,** which is communicatively coupled to the processor **104.** The mobile device **102** may include a smart phone, cellular telephone, tablet, notebook computer, netbook computer, personal data assistant, a combination thereof, or any other suitable computing device. The mobile device **102** may further include hardware, software, and/or any suitable combination thereof, configured to interact with an associated user, a networked device, networked storage, removable storage, display, user interface components, remote devices, radio transceivers, or the like. The processor **104** may also control the overall operations of the mobile device 102.

The memory **108** may include, for example and without limitation, a mobile wallet **116** that is capable of storing information related to a virtual credit card **118,** a predefined payment source **120,** user/device identification information **122,** transaction rules **124,** and the like. In accordance with one embodiment, the mobile wallet **116** may be downloaded or retrieved from the payment processor **132** and operable in the memory **108** of the mobile device **102,** or may be installed as specific hardware in the mobile device **102.** As illustrated in FIGURE 1, the mobile wallet **116** may include a virtual credit card **118,** which may be issued on the fly during a transaction, issued by the payment processor **132** during set up of the mobile wallet **116,** upon request from a user associated with the mobile device **102,** or the like. The virtual credit card **118** may correspond to a credit card, a charge card, or prepaid card issued by the payment processor **132** in association with MASTERCARD, VISA, DISCOVER CARD, AMERICAN EXPRESS, etc., rules and regulations. Accordingly, the mobile wallet **116** may further store one or more transaction rules or regulations **124** associated with the virtual credit card **118,** operation of the mobile wallet **116,** instructions for processing transactions with vendors **142,** and the like. For example, the transaction rules **124** may include special handling instructions for certain vendors, products, services, locations, etc., which may indicate the type of payment to use, type of authorization, type of validation, type of user identification (e.g., PIN, social security number, mother's maiden name, etc.), and the like.

The mobile wallet **116** may also include some form of predefined payment source **120,** i.e., a credit card account, checking account, savings account, a charge card account, debit card account, etc., associated with the user that is provided by a bank, a financing company, a governmental entity, the payment processor **132,** or the like. According to one embodiment, the predefined payment source **120** may be used to fund or "top-up" the virtual credit card **118,** as discussed in greater detail below. The mobile wallet **116** may also include some form of user/device identification information **122,** which may be used to identify/authenticate the user associated with the mobile device **102.** According to one embodiment, the user/device identification **122** may be communicated to the payment processor **132** during installation of the wallet **116** on the mobile device **102,** a registration process associated with the user/mobile device **102,** provided by the user during association of the predefined payment source **120,** or the like. In addition, the user/device identification **122** may be required during the processing of a transaction with the vendor **142,** as discussed in greater detail below.

The mobile device **102** may also include one or more communications interface devices **112, 114** for communicating with external devices or to receive external input. The I/O interface **114** may communicate with a user input/display device **126** for displaying information to users, and for receiving user input, such as a keyboard or touch/writable screen, for inputting text, and/or a cursor control device, and the like, for communicating user input information and command selections to the processor **104.** The I/O interface **112** may receive a virtual credit card **118** from a payment processor **132,** an authorization request **148** including transaction details **150** from a vendor **142,** send an authorization response **152** including virtual card information **118** and device identification **122,** and the like, as are discussed in greater detail below. The various components of the mobile device **102** may be all connected by a data/control bus **110.**

The memory **108** may represent any type of non-transitory computer readable medium such as random access memory (RAM), read only memory (ROM), magnetic disk or tape, optical disk, flash memory, or holographic memory. In one embodiment, the memory **108** comprises a combination of random access memory and read only memory. In some embodiments, the processor **104** and memory **108** may be combined in a single chip. In another embodiment, the memory **108** may further correspond to any mass storage device(s), for example, magnetic storage drives, a hard disk drive, optical storage devices, flash memory devices, or a suitable combination thereof. The network interface(s) **112, 114** allow the mobile device **102** to communicate with other devices via a computer network, a cellular network, advanced cellular networks, personal area networks, and may comprise a modulator/demodulator (MODEM). Memory **108** may store data the processed in the method as well as the instructions **106** for performing the exemplary method.

The digital processor **104** can be variously embodied, such as by a single core processor, a dual core processor (or more generally by a multiple core processor), a digital processor and cooperating math coprocessor, a digital controller, or the like. The digital processor **104,** in addition to controlling the operation of the mobile device **102,** executes instructions stored in memory **108** for performing portions of the methods outlined in FIGURES 2-4.

The mobile wallet payment system **100** illustrated in FIGURE 1 may further include a payment processor device **132** associated with a payment processor that is in data communication with the network **130** via a communications link **134.** The payment processor device **132** may include a processor **158,** which is capable of implementing at least a portion of the exemplary method described in FIGURES 2-4 by execution of software processing instructions **160** which are stored in memory, such as memory **162,** which is communicatively coupled to the processor **158.** The processor **158** may also control the overall operations of the payment processor **132.**

It will be appreciated that the payment processor **132** is representative of a computing device that is capable of facilitating interaction among disparate other computing devices in data communication therewith, such as, for example and without limitation, the mobile device **102,** the vendor device **142,** and the like. In accordance with one embodiment, the payment processor **132** is capable of being employed as one possible hardware configuration to support the systems and methods described herein. Accordingly, although the payment processor **132** is illustrated as a standalone computing device, any suitable computing environment is may be employed. For example, computing architectures including, but not limited to, multiprocessor, distributed, tablet, mainframe, supercomputer, digital and analog can be employed in accordance with varying embodiments set forth herein. It will further be appreciated that the payment processor **132** may include computer workstations, personal computers, combinations thereof, or any other computing devices.

The memory **162** may include, for example and without limitation, instructions **160** which are executed by the processor **158** for performing at least a portion of the methods set forth in FIGURES 2-4. The instructions **160** may include a virtual credit card issuer **170,** that is configured to issue credit cards, prepaid cards, and the like, in accordance with rules and regulations established by MASTERCARD, VISA, DISCOVER CARD, AMERICAN EXPRESS, or the like. The virtual credit card issuer **170** of the payment processor **132** may further be configured to generate, i.e., issue, credit cards, encrypt data associated with a user or account on credit cards or associated semiconductor chips, perform the card monetary authorizations and settle all funds with all parties involved, e.g., a vendor **142,** the consumer (mobile device **102),** a bank, etc. The payment processor **132** is illustrated in FIGURE 1 as a server for example purposes only, and it will be appreciated that any suitable hardware, software, or combinations thereof, are capable of assisting in the issuance of virtual credit cards **118** as set forth in greater detail below.

In some instances, the virtual credit card issuer **170** of the payment processor **132** may issue virtual cards **118** on demand for a specific purchase, provide physical cards to a user (e.g., barcodes for attachment to the mobile device **102),** wrist watches (integral electronics storing and communicating account information), or other like technologies associated with user mobility. The virtual credit card issuer **170** of the payment processor **132** may send and receive information to the mobile device **102** corresponding to the mobile wallet **116,** for example communicating a virtual credit card **118** for use by the mobile wallet **116** for transactions. For example, the virtual credit card issuer **170** of the payment processor **132** may be configured to dynamically generate a virtual credit card **116** that may be used in completing a transaction between the vendor **142** and the mobile device **102.**

The virtual credit card issuer **170** may also be configured to utilize the predefined payment source **120,** i.e., a credit card account, checking account, savings account, a charge card account, debit card account, etc., associated with the user that is provided by a bank, a financing company, a governmental entity, or the like, to fund or "top-up" the virtual credit card **118,** as discussed in greater detail below.

The instructions **160** may also include a payment processing component **172** that is configured to respond to a payment request **154** from the vendor **142,** which includes transaction details **150,** virtual card information **118,** device identification **122,** and the like. In such a configuration, the payment processing component **172** of the payment processor **132** may provide payment to the vendor **142** enabling the completion of the transaction.

The payment processor **132** may also include one or more communications interface devices **166, 168** for communicating with external devices or to receive external input. The I/O interface **166** may communicate with the data storage device **136.** The data storage device **136** may be any mass storage device known in the art including, for example and without limitation, magnetic storage drives, a hard disk drive, optical storage devices, flash memory devices, or any suitable combination thereof. In accordance with one embodiment, the data storage device **136,** illustrated in FIGURE 1 as a database, may be configured to store an online mobile wallet **116** corresponding to the mobile wallet **116** on the mobile device **102,** one or more virtual credit cards **118** issued by the payment processor **132,** one or more predefined payment sources **120** supplied by the user of the mobile device **102,** user/device identification information **122,** and the like. It will be appreciated that the virtual credit card **118,** the payment source **120,** and the identification information **122** may be stored in association with each other, such that each mobile device **102** or user has an associated mobile wallet **116,** virtual credit cards **118,** payment sources **120,** identification information **122,** and the like.

The I/O interface **168** may communicate with the network **130** via the communications link **134,** send a virtual credit card **118** to the mobile device **102,** receive a payment request **154** including transaction details **150** from a vendor **142,** communicate with one or more banks (not shown), and the like, as are discussed in greater detail below. The various components of the payment processor **132** may be all connected by a data/control bus **164.** In one embodiment, the payment processor **132** is capable of processing closed-loop accounts (accounts that are only accepted at a single retailer or subset of retailers) or open-loop (branded card, such as MASTERCARD, VISA, etc., acceptable wherever such brands are accepted). The payment processor **132** may provide end-to-end services, e.g., issuing, processing, and reconciliation operations.

According to one embodiment, the communications link **134** may include, for example and without limitation, 802.11a, 802.11b, 802.11g, 802.11(x), WiMax, LTE, Bluetooth, the public switched telephone network, GSM, CDMA, a proprietary communications network, infrared, optical, or any other suitable wired or wireless data transmission communications known in the art. Various network protocols, implementations or models may be used to facilitate communications amongst the various components illustrated in FIGURE 1 including, for example and without limitation, TCP/IP, token rings, Ethernet, WAN, VLAN, WLAN, Internet, other packet-switching protocols, or the like. Additional operations of the payment processor **132** will be better understood in conjunction with the exemplary embodiments of FIGURES 2-4, as discussed below.

The memory **162** may represent any type of non-transitory computer readable medium such as random access memory (RAM), read only memory (ROM), magnetic disk or tape, optical disk, flash memory, or holographic memory. In one embodiment, the memory **162** comprises a combination of random access memory and read only memory. In some embodiments, the processor **158** and memory **162** may be combined in a single chip. In another embodiment, the memory **162** may further correspond to any mass storage device(s), for example, magnetic storage drives, a hard disk drive, optical storage devices, flash memory devices, or a suitable combination thereof. The network interface(s) **166, 168** allow the payment processor **132** to communicate with other devices via a computer network the computer network 130, a cellular network, advanced cellular networks, personal area networks, and may comprise a modulator/demodulator (MODEM). Memory **162** may store data the processed in the method as well as the instructions **160** for performing the exemplary method.

The digital processor **158** can be variously embodied, such as by a single core processor, a dual core processor (or more generally by a multiple core processor), a digital processor and cooperating math coprocessor, a digital controller, or the like. The digital processor **158,** in addition to controlling the operation of the payment processor **132,** executes instructions stored in memory 162 for performing portions of the method outlined in FIGURES 2-4.

The mobile wallet payment system **100** illustrated in FIGURE 1 further includes at least one vendor device **142,** depicted as a point-of-sale device such as, for example and without limitation, a cash register, a networked computing device, or the like. FIGURE 1 further illustrates a mobile device **156,** which is also capable of functioning as a vendor device **142** in accordance with the systems and methods described herein. Thus, as referenced hereinafter, the vendor device **142** may refer to the point-of-sale device or mobile device **156** shown in FIGURE 1. According to one embodiment, the vendor device **142** includes a processor and memory (not shown) operable to facilitate interactions with the mobile device **102** and/or the payment processor **132,** as discussed in greater detail below. In such an embodiment, the vendor device **142** includes a wired or wireless interface device **144,** such as a card reader, NFC reader, smartcard reader, proprietary interface, network interface card, BLUETOOTH module, I/R module, or the like.

As shown in FIGURE 1, the vendor device **142** is configured to communicate with the mobile device **102** via the communications link **140,** and with the network **130** via the communications link **146.** The communications links **140** and **146** may comprise, for example and without limitation WiMax, LTE, 802.11a, 802.11b, 802.11g, 802.11(x), Bluetooth, the public switched telephone network, a proprietary communications network, infrared, optical, or any other suitable wired or wireless data transmission communications known in the art. In accordance with one embodiment, the communications link **140** may be implemented as a short distance wireless communication transmission, such as, NFC, BLUETOOTH, I/R, or the like.

Although illustrated in FIGURE 1 as a point-of-sale device, the vendor **142** may be implemented as a website, another mobile device (e.g., the vendor mobile device **156),** or other suitable computing system capable of interaction with the mobile device **102** and the mobile wallet **116** stored thereon. It will be appreciated that the vendor **142** may include suitable hardware, software, or combinations thereof, configured to interact with the mobile device **102,** the network **130,** the payment processor **132,** and the like. For example, the vendor **142** may include a processor, memory, a system bus, instructions, network interface cards, wireless transceivers, and the like, operable to facilitate transactions as set forth herein.

In accordance with one embodiment, the vendor **142** may be configured to communicate a request **148** for authorization of a purchase to the mobile device **102,** which request **148** includes details **150** assoicated with the current transaction. The mobile device **102,** in accordance with the mobile wallet **116** resident thereon, determines whether a virtual card **118** associated with the payment processor **132** is associated with the mobile wallet **116.** When no such card **118** is present, a new virtual credit card **118** is requested and received from the payment processor **132.** This virtual card **118** may then be stored in the mobile wallet **116** for use in the current and/or future transactions. The card may be issued in response to transaction information **150** communicated by the mobile device **102** to the payment processor **132,** or just issued for this specific transaction by the payment processor **132** in response to a payment request **154** received from the vendor **142** (as discussed in greater detail below).

The mobile device **102** may then communicate an authorization response 152 approving the transaction to the vendor **142.** The authorization received from the mobile device **102** may include payment information corresponding to the virtual card **118** dynamically issued by the payment processor **132,** a previously created virtual card **118,** or the like.

After receiving the authorization approval from the mobile device **102,** the vendor communicates a payment request **154** including the virtual card information **118,** device identification **122,** and transaction details **150** to the payment processor **132** for approval to complete the transaction. The payment processor **132** may then verify the identity of the mobile device **102** based upon device identification **122** which is associated with the transaction information **150,** i.e., verify that the mobile device **102** which communicated the virtual card information **118** is the mobile device **102** to which the payment processor **132** issued the virtual card. Funding of the virtual card **118** is then performed by the payment processor **132** using an account serviced by the payment processor **132** associated with the mobile device **102.** In one embodiment, funding of the virtual card **118** may be made by the payment processor **132** in accordance with previously received instructions from the user associated with the mobile device **102,** transaction rules, associated credit cards, or the like.

In such an embodiment, any predefined payment method **120** may be used as the manner in which the virtual card receives funds or from which credit in at least the amount needed to complete the transaction. The payment processor **132** analyzes the request **154** and identifies the mobile device **102** associated with the transaction. The payment processor **132** may then load funds onto the virtual card **118** and allow payment to be made to the vendor **142** as requested, using an account previously registered with the payment processor **132,** e.g., a predefined payment form **120** such as a credit card, checking account, savings account, etc The transaction associated with the request **154** is then approved, which approval is communicated back to the vendor **142** to allow the user associated with the mobile device **102** to receive the goods or services associated with the transaction.

In accordance with another embodiment, the vendor **142** may be configured to communicate an authorization request **148,** including details of the transaction **150,** to the mobile device **102** so as to initiate completion of a sales transaction. For example, the user may select a good or service to purchase from the vendor **142** and proffer the mobile device **102** for mobile payment. The vendor device **142** may then communicate an authorization request **148** containing the transaction details **150** to the mobile wallet **116** for authorization. In the event that the wallet **116** already includes a virtual credit card **118,** the mobile device **102** submits the virtual credit card **118** and authorizes the payment in response to the authorization request **148.** When the mobile wallet **116** does not include a suitable virtual credit card **118,** or the virtual credit card **118** on the mobile device **102** lacks sufficient funds, the mobile device **102** may contact the payment processor **132** via the network **130** for suitable funding. The payment processor **132** may generate a new virtual card **118** on the fly, top up an amount on the card **118** using the predefined payment source **120,** or the like. That is, a valid credit card may be dynamically issued as needed by the payment processor **132** for use by the mobile device **102** in making a payment for a transaction. The new or updated virtual credit card **118** is then sent to the mobile device **102** for use by the mobile wallet **116.**

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on a server or other location to perform certain functions.

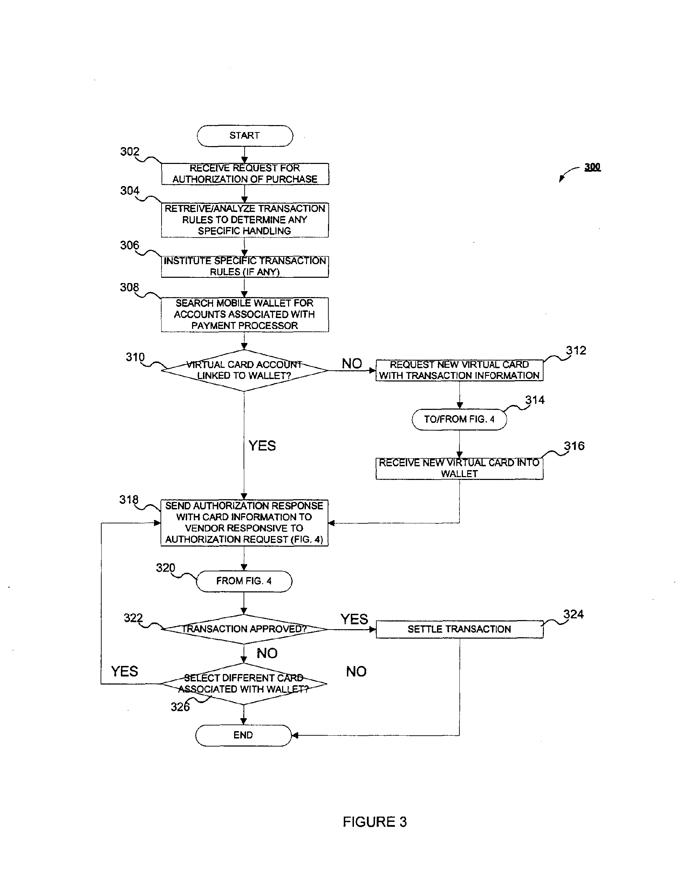

Turning now to FIGURE 2, there is shown a flow chart **200** illustrating an exemplary method for configuring mobile wallet payment processing on an associated mobile device **102.** FIGURE 3, discussed below, depicts a flow chart **300** illustrating an exemplary implementation of mobile wallet payment processing. As will be appreciated, the steps of the method need not all progress in the order illustrated and fewer, more, or different steps may be performed. While reference is made herein to the mobile device **102,** other computer systems are also capable of implementation and use in accordance with the method of FIGURES 2 and 3.

At **202,** the mobile wallet **116** is installed on the mobile device **102.** As discussed above, the mobile wallet **116** may comprise an application downloaded by the mobile device **102** for installation thereon, e.g., an "app" downloaded from ITUNES, ANDROID sites, BLACKBERRY sites, WINDOWS sites, from the payment processor **132,** from an online store (e.g., associated with vendor **142),** or the like. The mobile wallet **116** may also be installed on the mobile device **102** via integration of specific hardware, firmware updates, software updates, or the like. According to one embodiment, the mobile wallet **116** is provided to users holding certain physical credit cards, e.g., holders of VISA, MASTERCARD, DISCOVERY, or AMERICAN EXPRESS credit cards, or holders of prepaid credit or gift cards associated with such credit card providers. It will be appreciated that the installation of the mobile wallet **116** on the mobile device **102** may be initiated by an associated user, by a service provider, by an already installed application, by a technician, or the like.

At **204,** the associated user is prompted, via a suitable graphical user interface on the display **126** of the mobile device **102,** to register, e.g., input, one or more predefined payment sources **120** to be associated with the user/mobile device **102** with respect to the payment processor **132.** That is, the user associated with the mobile device **102** is prompted to input one or more payment sources **120** (e.g., a bank account, savings account, credit card number, debit card number) that may be used by the virtual credit card issuer **170** of the payment processor **132** to issue a virtual credit card **118** for the mobile wallet **116,** as discussed in greater detail below. According to one embodiment, the installation and provisioning of information by the user via the mobile device **102** may be accomplished between the payment processor **132** and the mobile device **102** online (via direct network connections, e.g., the network **130),** offline (internal to the wallet **116** on the mobile device **102),** or a combination of the two, dependent upon the network connectivity of the mobile device **102.** As such, at **206,** the predefined payment source **120** is communicated to the payment processor **132** in accordance with one of the examples just set forth.

At **208,** the user is prompted to select a default payment option to be used by the mobile wallet **116** for completing transactions. For example, the user may designate one of a plurality of credit cards (predefined payment source **120)** as the default payment to be used for transactions, may designate a checking or savings account, or the like. A determination is then made whether the default payment selected by the user corresponds to a card (account) that has been issued by the payment processor **132** at **210.** That is, a determination is made whether the selected default payment of the mobile wallet **116** operating on the mobile device **102** (when offline) or through the payment processor **132** (when online) corresponds to a credit card account not processed by the payment processor **132** (e.g., a bank issued VISA, MASTERCARD, etc., credit card, a checking account, or the like).

When the selected default payment does not correspond to a card account issued by the payment processor **132,** operations proceed to **212.** At **212,** one of the predefined payment sources **120** is designated as the default payment option to be used in subsequent transactions involving the mobile wallet **116.** That is, when the user neglects to identify a particular card account for use as the default payment option, or when the selected card account is not one that was issued by the payment processor **132,** one of the predefined payment sources **120** is designated to be used by the mobile wallet **116** when prompted for payment by a vendor **142.** For example, the user may designate an AMERICAN EXPRESS credit card account as the default payment option. In such an example, the mobile wallet **116,** when prompted for payment authorization, i.e., the authorization request **148,** will use that AMERICAN EXPRESS credit card account (for topping up a virtual card **118** issued by the virtual credit card issuer **170** of the payment processor **132,** as discussed more fully above).

According to such an example embodiment, the mobile wallet **116** may request a virtual card **118** from the payment processor **132** to be used in a particular transaction, with the virtual card **118** then issued by the virtual credit card issuer **170** on-the-fly and used to satisfy the transaction. The virtual credit card issuer **170** of the payment processor **132** may then charge or debit the predefined payment source **120** for the amount, such that the user only sees the charges/debits as associated with the predefined payment source **120,** i.e., no knowledge that payment to a vendor **142** was actually accomplished using the virtual credit card **118.** For example, the user selects an AMERICAN EXPRESS card to be used for mobile payments, while the payment processor **132** is authorized to issue prepaid MASTERCARD cards. When a transaction is initiated, the processor **132** dynamically generates a new MASTERCARD having the amount necessary to satisfy the vendor **142** to complete the transaction, while also charging the corresponding amount to the AMERICAN EXPRESS card. Thus, the user only sees the charges to the AMERICAN EXPRESS card and not the actual virtual credit card **118** that was used to complete the transaction with the vendor **142.** Operations then terminate with respect to FIGURE 2.

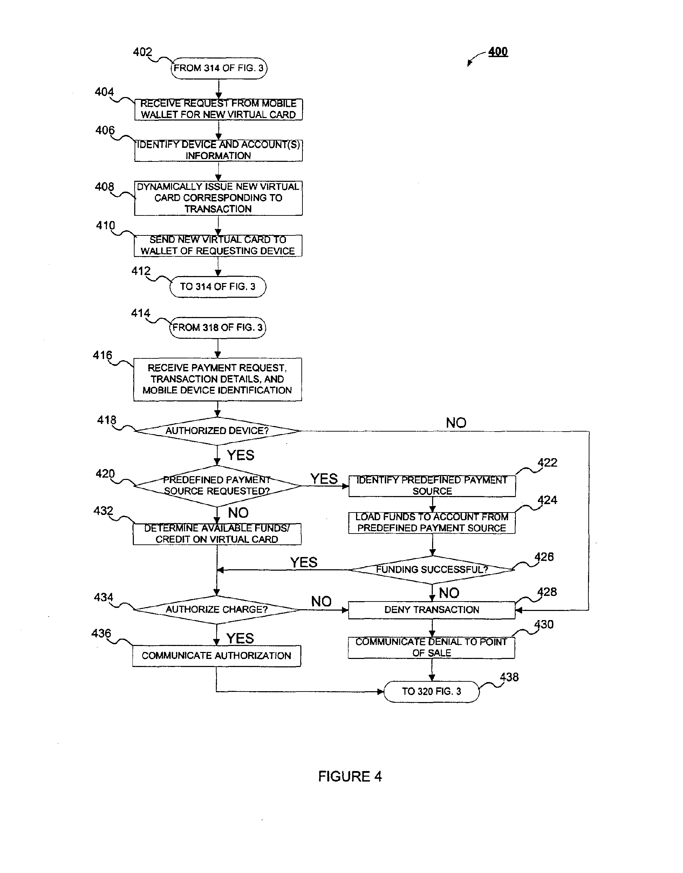

Returning to **210,** when it is determined that the default payment option selected by the user corresponds to a card account that is issued by or serviced by the payment processor **132,** operations proceed to **214.** At **214,** the mobile device **102** receives a virtual credit card **118** issued by the virtual credit card issuer **170** of the payment processor **132,** and links this virtual credit card **118** with the mobile wallet **116** on the mobile device **102** at **216.** According to one embodiment, the virtual credit card **118** is representative of a typical credit card account, which is issued and processed by the components of the payment processor **132,** e.g., the virtual credit card issuer **170** and the payment processing component **172,** thereby allowing the payment processor **132** to suitably issue, top-up, or otherwise administer the card account. Operations of mobile wallet payment processing will be better understood in conjunction with the example implementation set forth in FIGURE 3, which illustrates implementation on the mobile device **102** and FIGURE 4, which illustrates implementation on the payment processor **132.**

Referring now to FIGURE 3, there is shown a flowchart **300** that depicts part of an example transaction accomplished in accordance with the systems and methods set forth herein. It will be appreciated that the flowchart **300** is illustrative of the associated user using the mobile device **102,** i.e., the mobile wallet **116,** for payment to complete a transaction for goods or services provided by the vendor **142.** After the user has selected the desired goods or services, uses the mobile device **102** to initiate payment. Accordingly, at **302,** the mobile device **102** receives an authorization request **148** including details **150** of the transaction from the vendor **142** via the communications link **140.** It will be appreciated that the user may initiate a suitable NFC connection, or one such may be detected by the reader **144,** and the authorization request **148** is communicated to the mobile device **102** accordingly. According to one embodiment, the transaction details **150** may include, for example and without limitation, time/date, cost, identification of the goods/services, user/device identification **122,** and the like.

At **304,** one or more transaction rules **124** are retrieved and analyzed in accordance with the transaction details **122.** That is, the mobile wallet **116,** via the processor **104,** determines whether one or more transaction rules **124** are invoked based upon the transaction details **122,** e.g., the predefined payment source **120** requires certain processing rules (identification, user acknowledgement, etc.), PIN numbers required as input from a user, and the like. Any specific rules applicable to the transaction between the mobile device **102** and the vendor **142** are then selectively instituted to facilitate processing of the transaction at **306.**

At **308,** the mobile wallet **116** in the memory **108** of the mobile device **102** is searched so as to locate any accounts associated with the payment processor **132.** A determination is then made at **310** whether the mobile wallet **116** includes a linked virtual credit card **118** from the payment processor **132.** Upon a determination that no virtual card **118** is currently available in the mobile wallet **116,** operations proceed to **312.** At **312,** the mobile wallet **116** on the mobile device **102** requests a new virtual credit card **118** to be provided by the payment processor **132.** At **314,** flow proceeds to FIGURE 4, which illustrates the operations of the payment processor **132** in the dynamic generation of a virtual credit card **118** for the purchase initiated by the mobile device **102** in FIGURE 3.

Referring now to FIGURE 4, operations from FIGURE 3 are initiated at **402,** and the payment processor **132** receives a request from the mobile wallet **116** operative on the mobile device **102** for a virtual credit card **118.** The virtual credit card issuer **170** of the payment processor **132** then identifies the mobile device **102** requesting the card **118,** as well as any previously created accounts associated with the device at **406.** In one embodiment, the identification of the mobile device **102** is suitably performed in accordance with device identification information **122** that is communicated in association with the request for a virtual credit card **118.** The virtual credit card issuer **170** of the payment processor **132** may then identify any accounts previously associated with the mobile wallet **116** of this mobile device **102** stored in the associated database **136.**

The virtual credit card issuer **170** of the payment processor **132** then dynamically issues, i.e., generates, at **408,** a new virtual credit card **118** for use by the mobile wallet **116** specifically for the current transaction, for the current and subsequent transactions, or the like. In accordance with one embodiment, the virtual credit card issuer **170** of the payment processor **132** is configured to dynamically issue a new credit card that may be used to make purchases, as the virtual credit card issuer **170** of the payment processor **132** is capable of issuing the card and performing the backend validation associated with modern credit card transactions. In such circumstances, the virtual credit card issuer **170** of the payment processor **132** is authorized to issue a credit card on behalf of one or more of the major credit card services, i.e., VISA, MASTERCARD, AMERICAN EXPRESS, DISCOVER. The authorization may be limited to low or high credit line accounts, prepaid accounts, previous establishment of an account with the payment processor **132** (checking, PAYPAL, etc.), or the like. The virtual credit card issuer **170** of the payment processor **132** may issue such a credit card as a virtual credit card **118,** i.e., a credit card account issued for the limited purpose of facilitating transactions using the mobile wallet **116** payment mechanism set forth herein. The virtual credit card **118** is then communicated from the payment processor **132** to the mobile wallet **116** of the mobile device **102** at **410.** Operations then return to **314** of FIGURE 3 at **412.**

At **316,** the new virtual credit card **118** is received into the mobile wallet **116** of the mobile device **102.** That is, the new virtual credit card **118** is linked to the mobile wallet **116** on the mobile device **102** for use in completing mobile payments, as set forth herein. Accordingly, this new credit card may be electronically communicated to the mobile wallet **116** as the virtual credit card **118** referenced above. In such an embodiment, the payment processor **132** may, without prior approval from a lending institution or credit card service, issue such credit cards 'on-the-fly', wherein credit cards are issued on an as needed basis and at the time of the sale solely to facilitate completion of that particular sale. In one embodiment, this provisioning of the newly issued virtual credit card **118** may be accomplished in accordance with an over-the-air provisioning service, for example, the MASTERCARD Mobile Over-The-Air Provisioning Service (MOTAPS) allows on-demand activation of NFC mobile phones, for any mobile operator and any NFC enabled handset.

After receipt of the new virtual credit card **118** at **316,** or upon the determination at **310** that a virtual card **118** is already present in the mobile wallet **116,** operations progress to **318.** At **318,** an authorization response **152** is sent from the mobile wallet **116** of the mobile device **102** to the vendor **142,** which includes the virtual credit card information **118,** device/user identification information **122,** and the like. Operations then proceed to **414** of FIGURE 4.

Turning now to FIGURE 4, at **416,** a payment request **154** is received from the vendor **142** by the payment processing component **172** of the payment processor **132.** The payment request **154** includes, for example, details **150** corresponding to the transaction, the virtual credit card **118,** identification information **122** associated with the mobile device **102,** i.e., the transaction information **150,** the virtual card **118,** and the identification information **122** provided by the mobile wallet **116** in the authorization response **152.** That is, the vendor **142** sends a request **154** for payment to the payment processing component **172** of the payment processor **132** including the virtual credit card information **118,** an identification of the mobile device **102,** and the details **150** of the transaction for which payment is requested. In one embodiment, the payment request **154,** including the transaction details **150,** is communicated to the payment processing component **172** of the payment processor **132** by the mobile device **102,** thereby enabling dynamic issuance of the virtual credit card information **118** (if necessary) as set forth in FIGURE 2. It will be appreciated that while shown in FIGURE 4 as the vendor **142** interacting with the payment processor **132,** the mobile wallet **116** operative on the mobile device **102** is also capable of interacting with the payment processor **132** to facilitate communication of the transaction details **150** to the payment processor **132,** as set forth herein.

The payment processing component **172** of the payment processor **132** then determines, at **418,** whether the mobile device **102** is an authorized device. That is, the payment processing component **172** determines whether the identification information **122** contained in the request **154** from the vendor **142** corresponds to the mobile device **102** associated with the virtual credit card information **118.** In one embodiment, the payment processing component **172** of the payment processor **132** may reference stored account information or the like, which corresponds to the mobile device **102** so as to ascertain whether the correct mobile device **102** is associated with the transaction details **150** at **418.** Upon a negative determination at **418,** i.e., that the mobile device **102** is not authorized, operations proceed to **428,** wherupeon the transaction is denied by the payment processing component **172.** The denial of the transaction is then communicated to the point of sale, e.g., the vendor **142,** at **430** and operations with respect to FIGURE 4 terminate at **438** and return to **320** of FIGURE 3.

Returning to **418,** upon a determination that the mobile device **102** associated with the request for payment **154** received by the payment processing component **172** of the payment processor **132** is authorized, operations proceed to **420.** At **420,** a determination is made whether the mobile wallet **116** indicates that a predefined payment source **120** is to be used to conduct the sale. That is, when the user has indicated a predefined payment source **120** (non-payment processor **132** issued source) for use as the default payment, operations proceed to **422.** At **422,** the payment processing component **172** of the payment processor **132** identifies the predefined payment source **120** associated with the mobile wallet **116** that is to be used for completion of the transaction. For example, the selected default payment source **120** may correspond to a VISA, MASTERCARD, AMERICAN EXPRESS, or DISCOVER card account, PAYPAL account, etc., that has been registered/linked to the mobile wallet **116** and designated to be used for mobile payments.

A suitable amount of funds are then loaded by the virtual credit card issuer **170** of the payment processor **132** onto the virtual credit card **118** from the predefined payment source **120** at **424.** That is, the credit limit or available balance on the virtual credit card **118** is increased or funded by the virtual credit card issuer **170** of the payment processor **132** so as to enable payment to the vendor **142** for the transaction, as indicated in the transaction details **150.** It will be appreciated that the amount of funds loaded onto or made available via the virtual credit card **118** may be a user-selected amount, a minimum amount stipulated by the by the virtual credit card issuer **170** of the payment processor **132,** only the amount needed to satisfy the transaction, or the like. As discussed above, the "topping up" or loading of funds to the virtual credit card **118** may be transparent to the user, i.e., the user is made aware that the virtual card **118** is being used, or "masked" opaque to the user, i.e., the transaction appears to the user as being executed using the predefined payment source **120.** For example, when the user has selected a DISCOVER CARD as the predefined payment form **120,** the user's DISCOVER CARD account is charged for the amount used to top up the virtual card **118.** Thus, to the user, it appears as if the DISCOVER CARD were used to complete the transaction, and not the virtual card **118** that was dynamically issued for the mobile wallet **116** to use to complete the transaction.

A determination is then made at **426** whether the topping up of the virtual credit card **118** was successfully accomplished. Upon a determination at **426** that the virtual credit card **118** was successfully topped up with funds from the predefined payment source **120,** operations proceed to **434,** as set forth below. When it is determined at **426** that the funding of virtual credit card **118** was not successful, operations proceed to **428,** whereupon the transaction referenced in the received authorization request **148** is denied. For example, when the PAYPAL or registered credit card selected as the default payment source lacks sufficient funds or available credit, the topping up of the virtual credit card **118** will not be able to be completed and thus the transaction will be denied. At **430,** the denial of the authorization request **148** is communicated by the payment processing component **172** to the point of sale, e.g., the vendor **142,** indicating that the transaction was not completed.

Returning to **420,** when it is determined that a predefined payment source **120** was not selected as the default payment source, operations progress to **432.** At **432,** the available funds or credit available on the virtual credit card **118** are determined by the payment processing component **172** of the payment processor **132.** A determination is then made by the payment processing component **172** of the payment processor **132** at **434** whether to authorize the charge in the transaction details **150** of the authorization request **148.** When there are insufficient funds or the transaction must be denied for some particular violation of transaction rules **124,** or the like, operations proceed to **428,** whereupon the transaction is denied. This denial of the transaction is then communicated to the vendor **142** at **430,** following which operations with respect to FIGURE 4 terminate at **438** and return to **320** of FIGURE 3.

When authorization of the charge is affirmed by the payment processing component **172** of the payment processor **132** at **434,** operations proceed to **436,** whereupon the authorization is communicated to the vendor **142.** That is, the payment processing component **172** of the payment processor **132** responds in the affirmative to the authorization request **148.** In one embodiment, an affirmative response to the authorization request **148** may be communicated from the payment processor **132** to the mobile device **102** and thereafter to the vendor **142** at **436.** Operations of FIGURE 4 then terminate at **438** and return to **320** of FIGURE 3.

Returning to **320** of FIGURE 3, after processing by the payment processing component **172** of the payment processor **132** (as set forth in FIGURE 4), a determination is made at **322** whether the transaction has been approved by the payment processor **132.** That is, whether the payment processing component **172** of the payment processor **132** has authorized or denied payment to the vendor **142** for the amount set forth in the transaction details **150.** Upon a positive determination at **322,** operations proceed to **324.** At **324,** the transaction associated with the authorization request **148** between the mobile device **102** and the vendor **142** is settled, and operations with respect to FIGURE 3 terminate thereafter. Upon a determination at **322** that the transaction set forth in the transaction details **150** is denied, operations proceed to **326.**

At **326,** a determination is made whether the user associated with the mobile device **102** has selected a different credit card or account (e.g., another predefined payment form **120)** associated with the mobile wallet **116.** Upon a determination at **326** that another payment form **120** is available or input by the user via the mobile device **102,** operations return to **318,** whereupon the an authorization response **152** is communicated to the vendor **142** including the new card information. Operations then proceed to FIGURE 4 at **320** as set forth in greater detail above. Upon a determination at **326** that no selection of another credit card or account is made by the user associated with the mobile device **102,** the transaction remains denied and operations with respect to FIGURE 3 terminate. It will be appreciated that the implementation set forth in FIGURES 2-4 thus enables any credit card, account, or wallet, to be used as a mobile payment (such as NFC payments) even though such a credit card, account, or wallet issuer may not support NFC and/or mobile capabilities.

The method illustrated in FIGURES 2-4 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the flowcharts **200, 300,** and **400** shown respectively in FIGURE 2, FIGURE 3, and FIGURE 4, can be used to implement the mobile wallet payment processing method.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A computer-implemented method for mobile wallet payment processing, comprising:
receiving a request for a virtual credit card from a mobile wallet operative on an associated mobile device, the request including a device identification and a predefined payment form;
with a processor, dynamically issuing a virtual credit card responsive to the request, the virtual credit card associated with the device identification and the predefined payment form;
communicating the dynamically issued virtual credit card to the mobile wallet operative on the associated mobile device;
receiving a payment request for payment for at least one of a good or a service, the payment corresponding to a charge to the virtual credit card;
verifying funds associated with the virtual credit card relative to the charge of the payment request; and
rendering the payment to the vendor using the virtual credit card responsive to a verification of the funds associated with the virtual credit card.

2. The method of claim 1, wherein the payment request is received from at least one of the vendor or the mobile device; and/or
wherein the payment request includes the device identification associated with the mobile device, further comprising:
comparing the device identification of the payment request to the device identification associated with the virtual credit card; and
rendering payment when the device identification of the payment request and the device identification associated with the virtual credit card correspond.

3. The method of claim 2, wherein verifying funds on the virtual credit card further comprises dynamically loading funds onto the virtual credit card from the predefined payment form in accordance with the charge to the virtual credit card, preferably wherein the virtual credit card is a credit card, a charge card, or a prepaid card, further preferably wherein predefined payment form includes at least one of a checking account, a credit card account, a debit card account, a charge card account, or a savings account.

4. The method of claim 2, wherein dynamically issuing the virtual credit card further comprises receiving at least one transaction detail from the mobile device corresponding to a transaction between the associated mobile device and the at least one vendor, wherein the virtual credit card is issued in accordance with the at least one received transaction detail.

5. The method of claim 4, wherein the at least one transaction detail includes a payment amount, further comprising dynamically loading funds onto the virtual credit card from the predefined payment source corresponding to the payment amount associated with the transaction.

6. The method of claim 5, wherein verifying funds associated with the virtual credit card further comprises comparing funds associated with the virtual credit card to the payment amount associated with the transaction, and
wherein dynamically loading funds onto the virtual credit card from the predefined payment source is in response to a result of the comparing indicating insufficient funds associated with the virtual credit card.

7. The method of claim 5 or 6, wherein verifying funds associated with the virtual credit card further comprises:
retrieving at least one transaction rule associated with the transaction and the predefined payment form; and
dynamically loading funds onto the virtual credit card from the predefined payment source is in accordance with the at least one retrieved transaction rule,
preferably wherein the at least one transaction rule includes at least one of a preselected type of payment, a type of authorization, a type of validation, or a type of user identification.

8. A computer program product comprising computer readable instructions, which when executed on a computer causes the computer to perform a method according to any one of the preceding claims.

9. A system comprising memory storing instructions for performing a method according to any one of claims 1 to 7, and a processor in communication with the memory which implements the instructions.

10. A mobile wallet payment processing system, comprising:
a virtual credit card issuer configured for dynamically issuing a virtual credit card in response to a request received from a mobile wallet on an associated mobile device, the request including a device identification and a predefined payment form, and communicating the dynamically issued virtual credit card to the mobile wallet;
a payment processing component configured for:
analyzing a payment request for payment of a transaction for at least one of a good or a service, the payment corresponding to a charge to the virtual credit card,
verifying funds associated with the virtual credit card relative to the charge of the payment request, and
rendering the payment to the vendor using the virtual credit card responsive to a verification of the funds associated with the virtual credit card; and
a processor which implements at least one of the virtual credit card issuer and the payment processing component.

11. The system of claim 10, wherein the payment request is received from at least one of the vendor or the mobile device.

12. The system of claim 11, wherein the payment request includes the device identification associated with the mobile device, and wherein the payment processing component is further configured for:
comparing the device identification of the payment request to the device identification associated with the virtual credit card; and
rendering payment when the device identification of the payment request and the device identification associated with the virtual credit card correspond.

13. The system of claim 11 or 12, wherein the virtual credit card issuer is further configured for:
receiving at least one transaction detail from the mobile device corresponding to the transaction between the associated mobile device and the vendor, the at least one transaction detail including a payment amount;
comparing funds associated with the virtual credit card to the payment amount associated with the transaction; and
dynamically loading funds onto the virtual credit card from the predefined payment source corresponding to the payment amount associated with the transaction in response to a result of the comparing indicating insufficient funds associated with the virtual credit card,
preferably wherein the virtual credit card issuer is further configured for:
retrieving at least one transaction rule associated with the transaction and the predefined payment form from an associated database; and
dynamically loading funds onto the virtual credit card from the predefined payment source in accordance with the at least one retrieved transaction rule.

14. A computer-implemented method for mobile wallet payment processing, comprising:
selecting at least one predefined payment form corresponding to at least one of a checking account, a savings account, a credit card account, a debit card account, or a charge account;
linking, with a processor, the at least one selected predefined payment source to a mobile wallet on an associated mobile device;
receiving a dynamically issued virtual credit card from an associated payment processor, the virtual credit card funded from the at least one selected predefined payment source linked to the mobile wallet;
receiving an authorization request from a vendor for payment for at least one of a good or a service, the payment corresponding to a charge to the virtual credit card; and
rendering the payment to the vendor using the virtual credit card responsive to an approval of the authorization request.

15. The computer-implemented method of claim 14, wherein rendering the payment further comprises:
communicating the virtual credit card, a device identification, and an authorization to at least one of the vendor and the payment processor;
receiving an approval from the payment processor responsive to a payment request from the vendor; and
rendering the payment to the vendor in response to the approval from the payment processor.
